# EUROPEAN PATENT SPECIFICATION

(11) **EP 3 452 258 B1**
(45) Date of publication and mention of the grant of the patent: **05.07.2023**
(21) Application number: 17735611.0
(22) Date of filing: 02.05.2017
(51) Int. Cl.: B27B 29/00, B62D 33/02

(54) **TIMBER BUNK ASSEMBLY**
HOLZETAGENBETTANORDNUNG
ENSEMBLE LIT SUPERPOSÉ EN BOIS

(30) Priority: 06.05.2016 FI 20164106 U
(43) Date of publication of application: 13.03.2019
(73) Proprietor: Alucar Oy, 66640 Maksamaa (FI)
(72) Inventor: FINNE, Leif, 66640 Maksamaa (FI)
(74) Representative: Kolster Oy Ab
(86) International application number: PCT/FI2017/050338
(87) International publication number: WO 2017/191366

(56) References cited:
- EP-A1- 1 728 729
- EP-A1- 3 130 529
- WO-A1-98/39174
- FI-C- 65 584
- SE-C2- 536 748
- US-A- 5 567 096

## Description

### Background of the invention

The invention relates to a timber bunk assembly which comprises a timber bunk and at least two fasteners, according to the preamble of claim 1. Such an assembly is known from WO 98/39174, which discloses a mounting arrangement for mounting a loading bunk to a frame beam of a vehicle. The loading bunk includes a horizontal beam. A mounting plate can be moved longitudinally on the frame beam and locked thereto. The mounting plate includes locking means for securing the beam in the transverse direction. The locking means includes shape-conforming latching means for co-acting engagement with engagement devices disposed on the horizontal beam of the loading bunk.

SE 536748 discloses a vehicle for transporting timber. The vehicle is provided with timber bunks fastened to the vehicle.

### Brief description of the invention

According to the invention, a timber bunk assembly as defined by claim 1 is provided.

The timber bunk assembly according to the invention enables the fasteners to be adjusted. Fastenings of different kinds are possible by using basic parts of the fastener and additional parts connected to the basic part.

The timber bunk comprises a horizontal beam and two substantially vertical posts that are located at opposite sides of the horizontal beam. The horizontal beam and the posts are usually of steel. At both ends of the horizontal beam there are pockets fixedly connected to the horizontal beam and fixed to the horizontal beam by welding, for example. The posts are fixed to the pockets by bolting, in other words, the fastening of the posts is detachable. The pockets and the post are so designed that when the bolts are being tightened, the joint surfaces guide the posts into the correct angle in relation to the horizontal beam.

The timber bunk is secured to its base by at least two fasteners. The bunk assembly may be mounted either fixedly or movably to a chassis of a truck or trailer by using the basic parts of the fastener and additional parts that are appropriate to each individual case. A basic part of the fastener comprises a clamping piece, fitting piece, top plate, lateral guard, and bottom plate.

The trailer fastener has a slide plastic plate and a raising plate as the additional parts, and the bottom plate comprises a rubber pad and slide strip.

The horizontal beam of the timber bunk has a bottom flange that has a toothing. The horizontal beam has a measuring scale in the standard location, which helps the adjusting of the frame width without a separate measurement. The bottom plate of the fastener has a hole pattern for attaching standardised sets of push rods.

By means of the toothing and the fitting part of the fasteners, the position of the fasteners may be adjusted for different frame widths. The frame width of the fasteners may thus be adjusted without welding or mechanical machining.

### Brief description of the drawings

The invention will now be described in more detail in connection with preferred embodiments and with reference to the accompanying drawings, in which:
Figure 1a is a front view of a timber bunk;
Figure 1b is a side view of a timber bunk;
Figure 1c is a top view of a timber bunk;
Figure 2 is a perspective view of a timber bunk;
Figure 3a is an exploded view of a trailer fastener of a timber bunk assembly according to the invention;
Figure 3b is a side view of said trailer fastener of a timber bunk;
Figure 3c is a top view of said trailer fastener of a timber bunk;
Figure 4a is an exploded view of a movable fastener of a timber bunk assembly for a truck, which is not according to the invention;
Figure 4b is a side view of said movable fastener of a timber bunk for a truck;
Figure 4c is a top view of said movable fastener of a timber bunk for a truck;
Figure 5a is an exploded view of a fixed fastener of a timber bunk assembly for a truck, which is not according to the invention;
Figure 5b is a side view of said fixed fastener of a timber bunk for a truck;
Figure 5c is a top view of said fixed fastener of a timber bunk for a truck;
Figure 6 shows a scale on the horizontal beam, as seen from the side;
Figure 7 shows a toothing from the above.

### Detailed description of the invention

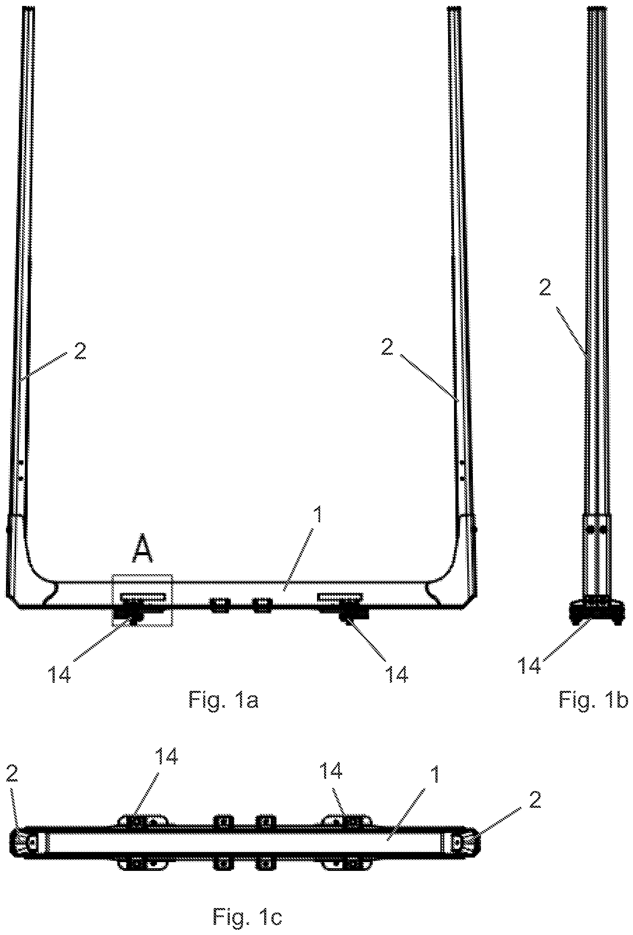

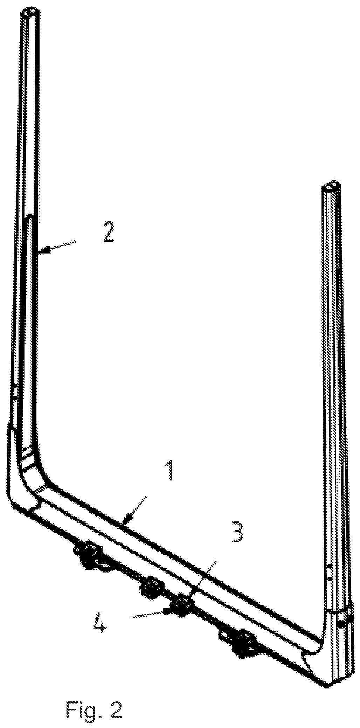

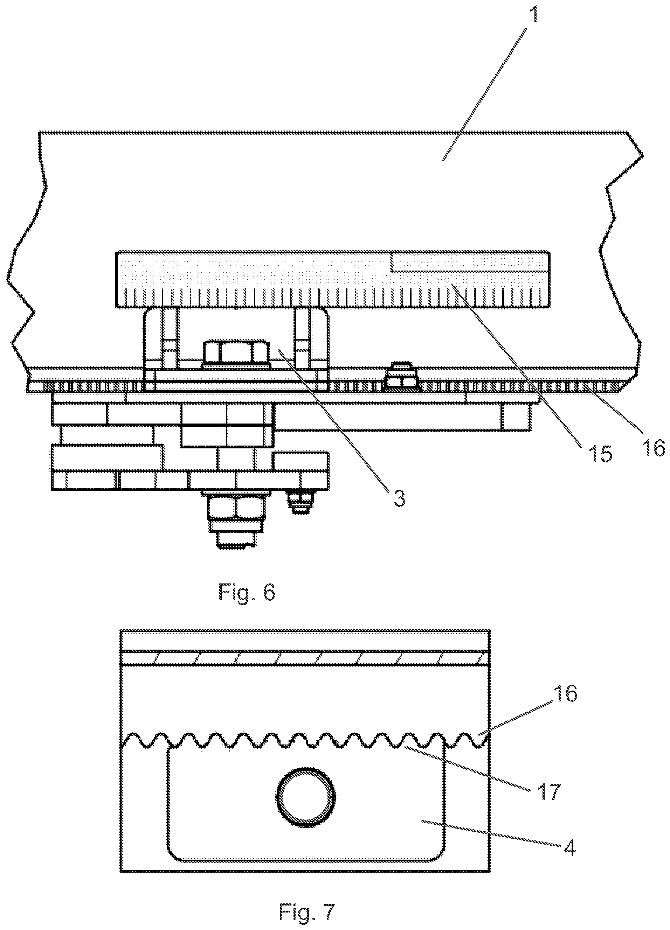

Figures 1a - 1c and Figure 2 show a timber bunk that has a horizontal beam 1 and two vertical posts 2. The timber bunk is fixed to its base by fasteners 14. The detail A of Figure 1a is shown in Figure 6 in a 1:3 scale.

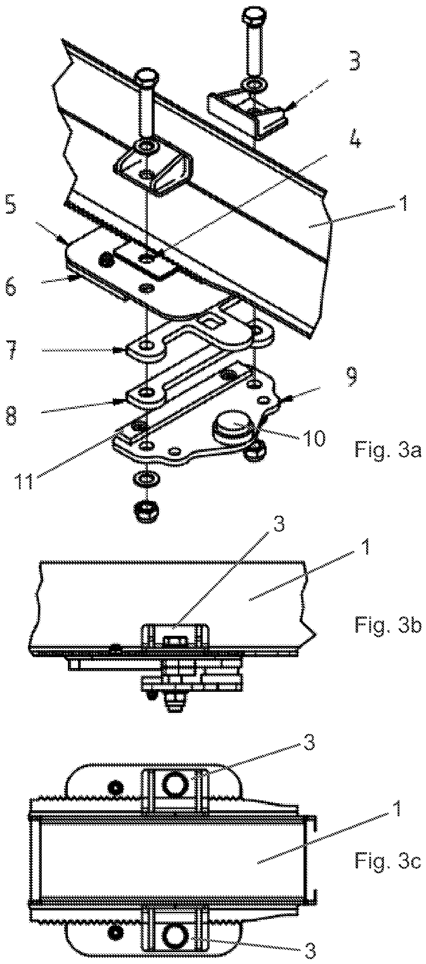

Figures 3a - 3c show a trailer fastener of a timber bunk assembly according to the invention. The trailer fastener comprises a clamping piece 3, fitting piece 4, top plate 5, slide plastic 6, raising plate 7, lateral guard 8, and bottom plate 9. The bottom plate 9 has a rubber pad 10 and a slide strip 11. When fastened to a carriage of a trailer, the timber bunk is attached with the fasteners of the carriage. The fastening of the timber bunk in this case takes place by means of a flange of the horizontal beam 1, clamping piece 3 and fitting piece 4. The flange of the horizontal beam 1 is straight in the middle of the horizontal beam 1, and the fitting piece 4 is installed with the straight side against the flange of the horizontal beam 1.

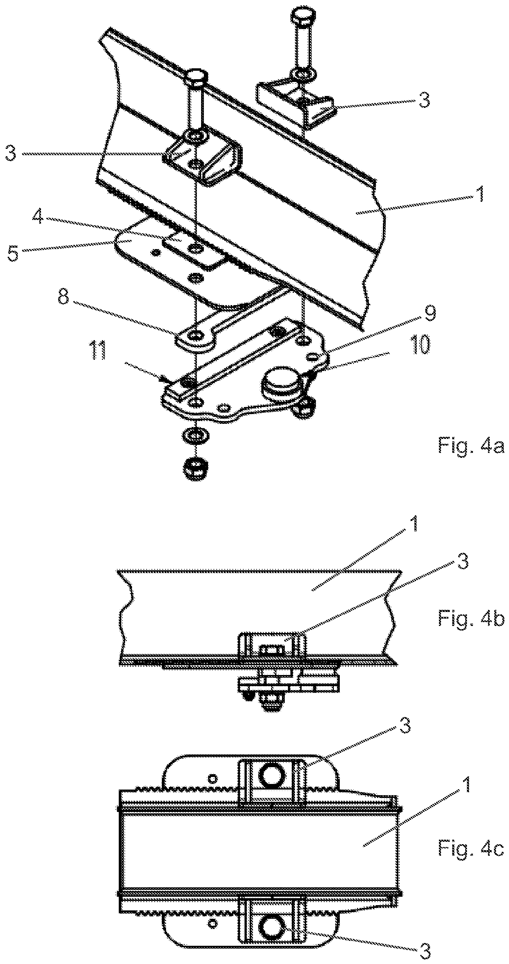

Figures 4a - 4c show a movable fastener of a timber bunk for a truck, which is an embodiment not covered by the claimed invention. The movable fastener of a truck comprises a clamping piece 3, fitting piece 4, top plate 5, lateral guard 8, and bottom plate 9. The bottom plate 9 has a rubber pad 10 and a slide strip 11.

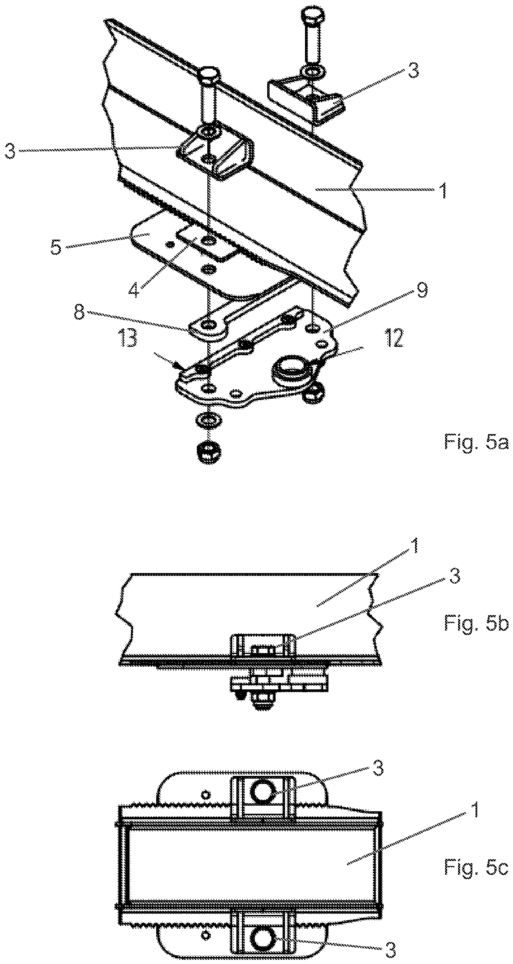

Figures 5a - 5c show a fixed fastener of a timber bunk for a truck, which is an embodiment not covered by the claimed invention. The fixed fastener of a truck comprises a clamping piece 3, fitting piece 4, top plate 5, lateral guard 8, and bottom plate 9. In the fixed faster of a truck, the rubber pad 10 and slide strip 11 are replaced with steel pieces 12, 13.

Figure 6 shows a measuring scale 15 on the horizontal beam 1 of the timber bunk as seen from the side, and Figure 7 shows the toothing from above. The horizontal beam 1 has a toothing 16 and the fitting piece 4 has a toothing 17 compatible with the toothing on the horizontal beam, by means of which the location of the fastener 14 is determined.

A person skilled in the art will find it obvious that, as technology advances, the invention may be implemented in many different ways falling within the scope of the claim.

The invention and its embodiments are thus not restricted to the above-described examples but may vary within the scope of the claim.

## Claims

1. A timber bunk assembly which comprises a timber bunk and at least two fasteners for fastening the timber bunk, wherein the fastener of the timber bunk comprises basic parts that comprise a bottom plate (9), a lateral guard (8) on top of the bottom plate (9), a top plate (5) on top of the lateral guard (8), a fitting piece (4) on top of the top plate (5) and clamping pieces (3) on top of the fitting piece (4), the basic parts being attachable together by bolts, **characterized in that** the fastener of the timber bunk comprises replaceable additional parts that are configured to complete the fastener into a fastener of a trailer, wherein said replaceable additional parts comprise a sliding plastic plate (6), a raising plate (7) and the bottom plate (9) which further comprises a rubber pad (10) and a slide strip (11) on its surface, the sliding plastic plate (6) and the raising plate (7) being next to each other below the top plate (5).

## Patentansprüche

1. Holzetagenbettanordnung, die ein Holzetagenbett und mindestens zwei Befestigungselemente zum Befestigen des Holzetagenbetts umfasst, wobei das Befestigungselement des Holzetagenbetts Basisteile umfasst, die eine untere Platte (9), einen Seitenschutz (8) auf der unteren Platte (9), eine obere Platte (5) auf dem Seitenschutz (8), ein Passstück (4) auf der oberen Platte (5) und Klemmstücke (3) auf dem Passstück (4) umfassen, wobei die Basisteile mittels Bolzen miteinander verbindbar sind, **dadurch gekennzeichnet, dass** das Befestigungselement des Holzetagenbetts austauschbare Zusatzteile umfasst, die dazu ausgelegt sind, das Befestigungselement zu einem Befestigungselement eines Anhängers zu vervollständigen, wobei die austauschbaren Zusatzteile eine Kunststoffgleitplatte (6), eine Hebeplatte (7) und die untere Platte (9) umfassen, die ferner eine Gummiauflage (10) und einen Gleitstreifen (11) auf deren Oberfläche umfasst, wobei die Kunststoffgleitplatte (6) und die Hebeplatte (7) unter der oberen Platte (5) nebeneinander angebracht sind.

## Revendications

1. Ensemble berceau de bois d'œuvre qui comprend un berceau de bois d'œuvre et au moins deux éléments de fixation pour fixer le berceau de bois d'œuvre, dans lequel l'élément de fixation du berceau de bois d'œuvre comprend des parties de base qui comprennent une plaque inférieure (9), une protection latérale (8) sur le dessus de la plaque inférieure (9), une plaque supérieure (5) sur le dessus de la protection latérale (8), une pièce d'ajustement (4) sur le dessus de la plaque supérieure (5) et des pièces de serrage (3) sur le dessus de la pièce d'ajustement (4), les parties de base pouvant être attachées ensemble par des boulons, **caractérisé en ce que** l'élément de fixation du berceau de bois d'œuvre comprend des parties supplémentaires remplaçables qui sont configurées pour compléter l'élément de fixation en un élément de fixation pour une remorque, dans lequel lesdites parties supplémentaires remplaçables comprennent une plaque coulissante en plastique (6), une plaque de rehaussement (7) et la plaque inférieure (9) qui comprend en outre un patin en caoutchouc (10) et une bande de glissement (11) sur sa surface, la plaque coulissante en plastique (6) et la plaque de rehaussement (7) étant juxtaposées sous la plaque supérieure (5).
